Europäisches Patentamt

European Patent Office

Office européen des brevets

(11) Numéro de publication: **0 172 800**
**A2**

(12) # DEMANDE DE BREVET EUROPEEN

(21) Numéro de dépôt: **85870104.8**

(22) Date de dépôt: **01.08.85**

(51) Int. Cl.⁴: **B 23 K 7/00**

(30) Priorité: **07.08.84 BE 6047992**

(43) Date de publication de la demande:
**26.02.86 Bulletin 86/9**

(84) Etats contractants désignés:
**AT DE FR GB IT LU SE**

(71) Demandeur: **CENTRE DE RECHERCHES METALLURGIQUES CENTRUM VOOR RESEARCH IN DE METALLURGIE Association sans but lucratif Vereniging zonder winstoogmerk Rue Montoyer, 47 B-1040 Bruxelles(BE)**

(72) Inventeur: **D'Haeyer, Raymond Rue des Forgerons, 2 B-4511 Barchon(BE)**

(74) Mandataire: **Lacasse, Lucien Emile et al, CENTRE DE RECHERCHES METALLURGIQUES Abbaye du Val-Benoît 11, rue Ernest Solvay B-4000 Liège(BE)**

(54) **Perfectionnement aux procédé d'oxycoupage d'un produit métallique.**

(57) Procédé d'oxycoupage d'un produit métallique (1), dans lequel on enduit d'une substance déterminée la surface inférieure du dit produit, on soumet alors le dit produit à une opération d'oxycoupage, puis on refroidit cette face inférieure dans la région de la coupe, caractérisé en ce que l'opération d'oxycoupage précitée comporte l'action d'un chalumeau d'oxycoupage (3) classique qui est suivie par l'action d'un jet d'oxygène (6), appelé d'appoint, dirigé de manière appropriée, afin d'éliminer les ponts.

EP 0 172 800 A2

./...

- 1 -

**Perfectionnement aux procédés d'oxycoupage d'un produit métallique.**

La présente invention porte sur un perfectionnement aux procédés d'oxycoupage d'un produit métallique, en particulier d'une brame de coulée continue.

On sait que les brames de coulée continue sont généralement obtenues par tronçonnage du brin métallique au moyen d'un chalumeau disposé au-dessus du brin et se déplaçant perpendiculairement à la trajectoire de la brame. Le chalumeau forme dans le produit, en l'occurrence le brin métallique, une saignée dont le métal vient adhérer à la face inférieure du produit où il forme une bavure. Ce type de problème peut aussi exister dans le cas du refendage (découpage longitudinal) des brames ou même dans le cas des blooms.

Pour faciliter l'élimination de cette bavure, le demandeur a déjà proposé par son brevet belge n° 896.117, d'appliquer sur la face inférieure du produit une substance réduisant l'adhérence de la bavure et de soumettre celle-ci à un refroidissement brusque, dès qu'elle est solidifiée.

L'expérience a montré que ce procédé assurait de façon très efficace le détachement des bavures d'oxycoupage et par conséquent la netteté des lèvres de la coupe. Il est cependant apparu que cette efficacité diminuait lorsque la vitesse de déplacement du chalumeau dépassait une certaine valeur, variable selon la nature, la température et les dimensions du produit et les caractéristiques de la flamme. Il en résulte un inconvénient sérieux, car la coupe perd de sa netteté et la bavure devient beaucoup plus difficile à éliminer.

Bien que le mécanisme n'en soit pas entièrement élucidé, il semble que cette situation résulte de la durée limitée du contact de l'oxygène de coupe avec le métal, durée d'autant plus restreinte que la vitesse de coupe est élevée. Sous l'effet des réactions engendrées par le chalumeau, le métal du produit fond. Une partie de ce métal est oxydée par contact avec le jet d'oxygène et est éliminée sous forme de particules solides; l'autre partie n'est pas oxydée, elle évacue la saignée sous forme d'une coulée de liquide dont une petite fraction forme la bavure et une autre fraction se fige sur les parois de la saignée, en arrière de la flamme de coupe. Il existe des zones de continuité entre ces deux fractions précitées resolidifiées sur le produit et plus précisément sur un même côté de la saignée. Nous appellerons "ponts" ces zones de continuité, constituées de métal non oxydé, donc résistant, ductile, difficile à cisailler par choc thermique.

La présente invention a pour objet un procédé permettant de remédier à cette situation et d'assurer, même à grande vitesse, une coupe nette et une totale élimination de la bavure d'oxycoupage.

Le procédé d'oxycoupage d'un produit métallique, objet de la présente invention, dans lequel on enduit d'une substance déterminée la surface inférieure du dit produit, on soumet alors le dit produit à une opération d'oxycoupage, puis on refroidit cette face inférieure dans la région de la coupe, est essentiellement caractérisé en ce que l'opération d'oxycoupage précitée comporte l'action d'un chalumeau d'oxycoupage classique qui est suivie par l'action d'un jet d'oxygène, appelé d'appoint, dirigé de manière appropriée afin d'éliminer les ponts.

Selon l'invention, ce jet d'appoint est avantageusement dérivé du jet d'oxygène du chalumeau d'oxycoupage, dit jet d'oxygène principal.

Toujours selon l'invention, on règle le dit jet d'appoint de telle façon qu'il s'évase dans la saignée et qu'il atteigne les parois de celle-ci uniquement dans la plage voisine de la bavure d'oxycoupage.

Cette flamme d'appoint permet d'assurer la refusion, l'oxydation et l'élimination du métal peu ou pas oxydé formant le pont c'est-à-dire la liaison entre une paroi de la saignée et la ou les bavures d'oxycoupage relatives à cette paroi. Ce métal oxydé vient s'ajouter aux bavures d'oxycoupage et il est éliminé avec celles-ci lors du refroidissement brusque qui leur est appliqué. Il en résulte que les bords de la coupe sont bien nets, même lorsque le chalumeau se déplace aux vitesses élevées pratiquées dans les installations industrielles.

Selon l'invention, il s'est avéré particulièrement intéressant que le jet d'oxygène d'appoint présente une inclinaison aussi faible que possible par rapport à l'axe du jet principal. A cet effet, l'angle $\alpha$ formé par les axes de ces deux jets ne doit pas excéder 10°, sous peine de provoquer une zone de turbulence dans la région d'intersection des jets et de perturber l'opération de coupe.

Egalement selon l'invention, les axes des deux jets se coupent de préférence dans le plan de la surface inférieure du produit métallique, c'est-à-dire de la face à laquelle adhère la bavure.

Il est cependant apparu, toujours sans sortir du cadre de l'invention, que les deux jets précités pouvaient se couper au-delà du plan de cette surface inférieure, c'est-à-dire à un niveau plus bas que celui de la dite face.

Dans ce cas, les points de percée des axes des deux jets précités dans le plan de la dite surface inférieure sont séparés par une distance $\delta$ qui ne pourra dépasser 25 mm.

Une distance supérieure à 25 mm entraînerait en effet le rejet du jet d'oxygène d'appoint dans une zone trop froide et l'empêcherait de jouer correctement son rôle.

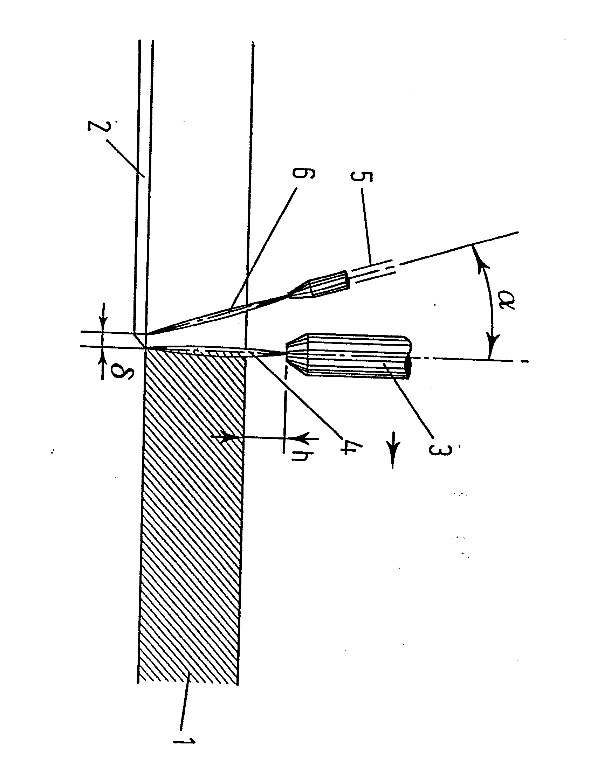

Le procédé de la présente invention est illustré par la figure ci-jointe, qui montre une brame en coupe transversale dans la section d'oxycoupage.

La brame 1 se trouve en cours d'oxycoupage et la partie hachurée représente la partie qui n'est pas encore coupée. Sous la partie coupée de la brame et adhérant à la face inférieure de celle-ci, se trouve une bavure 2. Le chalumeau principal 3 produit la flamme de chauffage et d'oxycoupage 4, tandis que le chalumeau d'appoint 5 envoie un jet d'oxygène 6. Les axes de ces deux jets forment entre eux un angle $\alpha$ qui n' excède pas 10° et ils se coupent au-delà du plan de la surface inférieure de la brame ($\delta \neq 0$).

A titre d'exemple de mise en oeuvre de l'invention, on a coupé une brame de coulée continue d'une épaisseur de 120 mm se trouvant à une température de 500°C, d'une part sans jet d' appoint et d'autre part avec un jet d'appoint. Le chalumeau se déplaçait à une vitesse de 20 cm/min., qui est une vitesse usuelle dans les conditions indiquées. Dans ces deux cas, le jet d'oxygène principal avait une pression de 5 bars. Pour l'oxycoupage avec un jet d'appoint, l'angle $\alpha$ valait 8° et les axes des deux jets se coupaient dans le plan de la face inférieure, donc $\delta$ = 0 mm.

L'oxycoupage sans jet d'appoint a laissé un pont d'acier non oxydé d'une épaisseur d'environ 2 mm, ce qui a entraîné des difficultés d'élimination de la bavure et une perte de netteté des bords de la coupe.

En appliquant, selon l'invention, un jet d'appoint d'une pression de 3,5 bars, on a éliminé entièrement et aisément le pont en acier et la bavure d'oxycoupage et obtenu une coupe parfaitement nette.

Revendications

1. Procédé d'oxycoupage d'un produit métallique, dans lequel on enduit d'une substance déterminée la surface inférieure du dit produit, on soumet alors le dit produit à une opération d'oxycoupage, puis on refroidit cette face inférieure dans la région de la coupe, caractérisé en ce que l'opération d'oxycoupage précitée comporte l'action d'un chalumeau d'oxycoupage classique qui est suivie par l'action d'un jet d'oxygène, appelé d'appoint, dirigé de manière appropriée afin d'éliminer les ponts.

2. Procédé suivant la revendication 1, caractérisé en ce que ce jet d'appoint est avantageusement dérivé du jet d'oxygène du chalumeau d'oxycoupage, dit jet d'oxygène principal.

3. Procédé suivant les revendications 1 ou 2, caractérisé en ce que l'on règle le dit jet d'appoint de telle façon qu'il s'évase dans la saignée et qu'il atteigne les parois de celle-ci uniquement dans la plage voisine de la bavure d' oxycoupage.

4. Procédé suivant l'une ou l'autre des revendications 1 à 3, caractérisé en ce que l'on incline l'axe du jet d'oxygène d' appoint, par rapport à l'axe du jet principal, d'un angle $\alpha$ n'excédant pas 10° et situé derrière le dit jet principal.

5. Procédé suivant l'une ou l'autre des revendications 1 à 4, caractérisé en ce que les points de percée des axes des dits jet principal et jet d'appoint dans le plan de la surface inférieure du produit sont séparés par une distance $\delta$ qui ne dépasse pas 25 mm.

0172800